(19) Europäisches Patentamt
European Patent Office
Office européen des brevets

(11) EP 2 342 606 B1

(12) **EUROPÄISCHE PATENTSCHRIFT**

(45) Veröffentlichungstag und Bekanntmachung des Hinweises auf die Patenterteilung:
**26.06.2013 Patentblatt 2013/26**

(21) Anmeldenummer: **09782352.0**

(22) Anmeldetag: **28.08.2009**

(51) Int Cl.:
*G05B 19/042* (2006.01)   *G11C 16/34* (2006.01)

(86) Internationale Anmeldenummer:
**PCT/EP2009/061156**

(87) Internationale Veröffentlichungsnummer:
**WO 2010/034588 (01.04.2010 Gazette 2010/13)**

(54) **STEUERGERÄT UND VERFAHREN ZUM BETREIBEN EINES STEUERGERÄTS, COMPUTERPROGRAMM, COMPUTERPROGRAMMPRODUKT**

CONTROLLER AND METHOD FOR OPERATING A CONTROLLER, COMPUTER PROGRAM, COMPUTER PROGRAM PRODUCT

APPAREIL DE COMMANDE ET PROCÉDÉ POUR FAIRE FONCTIONNER UN APPAREIL DE COMMANDE, PROGRAMME INFORMATIQUE, PRODUIT-PROGRAMME INFORMATIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.09.2008 DE 102008042445**

(43) Veröffentlichungstag der Anmeldung:
**13.07.2011 Patentblatt 2011/28**

(73) Patentinhaber: **Robert Bosch GmbH**
**70442 Stuttgart (DE)**

(72) Erfinder:
• **REIMANN, Gunther**
**71364 Winnenden (DE)**
• **HALD, Steffen**
**71409 Schwaikheim (DE)**
• **HILLIGES, Martin**
**75392 Deckenpfronn (DE)**
• **WENDT, Hauke**
**71254 Ditzingen (DE)**
• **GONZALEZ VAZ, Rocco**
**70437 Stuttgart (DE)**

(56) Entgegenhaltungen:
**EP-A2- 0 455 238     EP-A2- 1 089 148**
**WO-A1-2008/037595     WO-A2-2005/096137**

**EP 2 342 606 B1**

**Beschreibung**

Stand der Technik

Die Erfindung geht aus von einem Steuergerät, einem Verfahren und einem Computerprogramm oder einem Computerprogrammprodukt nach der Gattung der unabhängigen Ansprüche.

Steuergeräte im Automobilbereich speichern, beispielsweise bevor sie abgeschaltet werden, Daten in einem nichtflüchtigen Speicher. Die Steuergeräte werden beispielsweise abgeschaltet, wenn ein Fahrer eines Kraftfahrzeugs das Kraftfahrzeug abschaltet. Die maximale Anzahl an Schreibzugriffen auf einen zur Abspeicherung der Daten des Steuergeräts vorgesehenen Datenspeicher ist typischer Weise bauartbedingt auf einen bestimmten Maximalwert begrenzt. Nach Überschreiten dieses Maximalwerts ist nicht gewährleistet, dass die Daten in dem Speicher korrekt abgespeichert werden. Das bedeutet, dass Daten, die zum Betrieb des Steuergeräts oder zur Diagnose des Steuergeräts aus dem Speicher gelesen werden fehlerhaft sein können.

Typischer Weise lesen die Steuergeräte zu Beginn eines Betriebszyklus Daten aus dem Speicher. Es muss daher gewährleistet sein, dass diese Daten zum korrekten Betrieb des Steuergeräts fehlerfrei sind. Aus diesem Grund werden typischer Weise Speicher eingesetzt, bei denen gewährleistet ist, dass die Anzahl an maximal möglichen Schreibzugriffen auf den Speicher größer ist als beispielsweise eine von einem Hersteller des Kraftfahrzeugs spezifizierte Fahrzeuglebensdauer.

Die EP 1 089 148 A2 beschreibt ein Verfahren und eine Vorrichtung zur Steuerung von Prozessen in einem Fahrzeug. Die Prozesse werden nach einer Abschaltung des Antriebs ausgeführt, eine Energieversorgung bleibt entsprechend nach Abschaltung des Antriebs erhalten.

Offenbarung der Erfindung

Vorteile der Erfindung

Das erfindungsgemäße Steuergerät, Verfahren, Computerprogramm und Computerprogrammprodukt mit den Merkmalen der unabhängigen Ansprüche haben demgegenüber den Vorteil, dass zum einen bezogen auf eine Lebensdauer eines Steuergeräts weniger Schreibzugriffe erfolgen, wodurch günstigere Speicher mit geringerer maximaler Anzahl an Schreibzugriffen verwendet werden können. Zum anderen wird die Lebensdauer des Steuergeräts bezüglich des eingesetzten Speichers erhöht, da weniger Schreibzugriffe auf den Speicher erfolgen, als bei herkömmlichen Steuergeräten.

Durch die in den abhängigen Ansprüchen aufgeführten Maßnahmen sind vorteilhafte Weiterbildungen und Verbesserungen des in den unabhängigen Ansprüchen angegebenen Steuergeräts, Verfahrens, Computerprogramms und Computerprogrammprodukts möglich.

Besonders vorteilhaft ist die Datenspeicherung am Ende eines Betriebszyklus hinauszuzögern, und das Steuergerät für eine vorgegebene Zeitdauer verlängert eingeschaltet zu lassen. Das Ziel ist es, so lange zu warten, bis die Zündung am Fahrzeug wieder eingeschaltet wird. Dazu wird als Sollwert eine vorgegebene Zeitdauer gewählt, die größer ist, als beispielsweise die übliche Stillstandszeit eines in einem Verteilerbetrieb eingesetzten Kraftfahrzeugs, oder eines elektrischen Geräts, das häufig kurzzeitig abgeschaltet wird. Damit wird in diesem Fall eine Datenspeicherung überflüssig, da kein neuer Betriebszyklus des Steuergeräts vorliegt.

Besonders vorteilhaft ist es, den Sollwert variabel an eine Häufigkeit der Schreibvorgänge pro Betriebseinheit des Steuergeräts anzupassen. Bei Nutzung mehrerer Steuergeräte gleicher Bauart wird der Sollwert so an das individuelle Verhalten der unterschiedlichen Nutzer der Steuergeräte angepasst.

Besonders vorteilhaft ist es, den Sollwert um einen ersten vorgegebenen Wert zu erhöhen, wenn die Häufigkeit der Schreibvorgänge pro Betriebseinheit des Steuergeräts einen ersten vorgegebenen Schwellwert überschreitet. Dadurch wird der Sollwert besonders einfach korrigiert, bis die Wartezeit vor dem Abspeichern der Daten in dem Steuergerät groß genug ist, um ein zu häufiges Abspeichern zu vermeiden.

Besonders vorteilhaft ist es, den Sollwert um einen zweiten vorgegeben Wert zu verringern. Dadurch wird die Korrektur der vorgegebenen Zeitdauer erst zurückgenommen, wenn die Häufigkeit der Schreibvorgänge pro Betriebseinheit des Steuergeräts unter den ersten vorgegebenen Schwellwert sinkt.

Besonders vorteilhaft ist es, den Sollwert um einen zweiten vorgegeben Wert zu verringern, so lange der Sollwert größer als ein zweiter vorgegebener Schwellwert ist. Dadurch wird vermieden, dass der Sollwert für die Wartezeit kleiner als ein bestimmter Wert, beispielsweise Null wird.

Besonders vorteilhaft ist es, die Häufigkeit der Schreibvorgänge pro Betriebseinheit des Steuergeräts abhängig von einer aktuellen Laufleistung eines Kraftfahrzeugs oder einer aktuellen Anzahl an Betriebsstunden des Steuergeräts und einer akkumulierten Anzahl an Speicherzugriffen auf den Speicher zu ermitteln. Die Häufigkeit der Schreibvorgänge pro Betriebseinheit des Steuergeräts stellt dadurch ein sehr genaues Maß für die individuelle Nutzung des jeweiligen Steuergeräts dar.

Besonders vorteilhaft ist es, wenn der Sollwert einen dritten vorgegebenen Wert nicht überschreitet. Dadurch wird die Wartezeit bis zur Abspeicherung nach oben beschränkt, und so sichergestellt, dass die Daten nach Ablauf dieser maximalen Wartezeit abgespeichert werden.

Besonders vorteilhaft ist es, das Steuergerät abzuschalten sobald die Daten abgespeichert wurden. Dadurch wird die Energieaufnahme des Steuergeräts reduziert und somit beispielsweise eine Batterie, die zur Energieversorgung des Steuergeräts verwendet wird, geschont.

Zeichnungen

Ausführungsbeispiele der Erfindung sind in den Zeichnungen dargestellt und in der nachfolgenden Beschreibung näher erläutert. Es zeigen:

Figur 1    eine schematische Darstellung eines erfindungsgemäßen Steuergeräts,

Figur 2    ein Ablaufplan einer Ausführungsform des erfindungsgemäßen Verfahrens.

Beschreibung der Ausführungsbeispiele

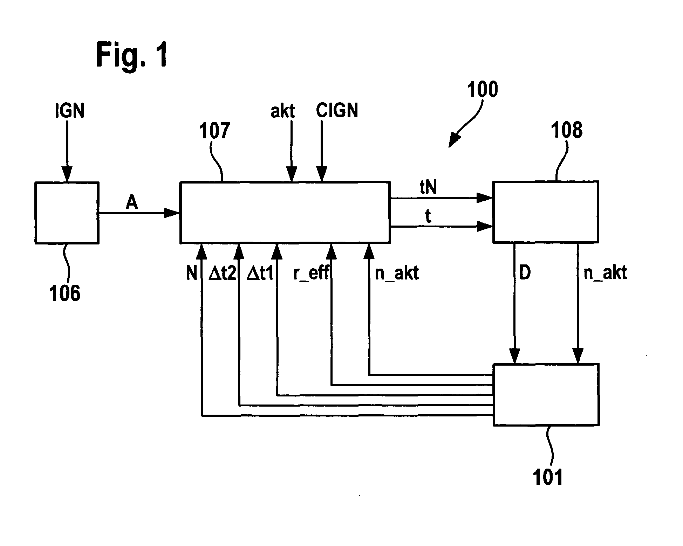

In Figur 1 ist ein Steuergerät 100 mit einem Speicher 101 dargestellt. Das Steuergerät umfasst zudem eine Erfassungseinrichtung 106, eine Ermittlungseinrichtung 107 und eine Berechnungseinrichtung 108.

Die Erfassungseinrichtung 106 erfasst ein Signal IGN, das beispielsweise von einem in Figur 1 nicht dargestellten Schalter an das Steuergerät 100 gesendet wird und einen Ausschaltwunsch, beispielsweise eines Fahrers eines Kraftfahrzeugs oder eines Benutzers eines elektronischen Geräts in dem das Steuergerät verbaut ist darstellt. Die Erfassungseinrichtung 106 ermittelt aus dem Signal IGN ein Signal A. Das Signal IGN ist beispielsweise ein Spannungssignal, dass die Werte 0,5 Volt und 4,5 Volt annimmt. Das Signal A ist beispielsweise ein digitales Signal, das in einem RAM-Speicher im Steuergerät 100 abgespeichert wird und die Werte 0 und 1 annimmt. Beispielsweise entspricht der Wert des Signals A = 1, dem Wunsch das Steuergerät 100 abzuschalten. Dem Wert des Signals IGN = 0,5 Volt ist beispielsweise ein Wert des Signals A=1 zugeordnet. Entsprechend ist dem Wert des Signals IGN = 4,5 Volt ein Wert des Signals A = 0 zugeordnet. Der Wert des Signals A = 0 bedeutet beispielsweise den Wunsch das Steuergerät 100 zu betreiben.

Das Signal A wird von der Erfassungseinrichtung 106 an die Ermittlungseinrichtung 107 gesendet. Die Ermittlungseinrichtung 107 empfängt zudem ein Signal akt, das beispielsweise in einem Kraftfahrzeug von einem Motorsteuergerät an das Steuergerät 100 gesendet wird und eine aktuelle Laufleistung des Kraftfahrzeugs seit der Herstellung des Kraftfahrzeugs in Kilometern angibt.

Die Ermittlungseinrichtung 107 liest einen ersten vorgegebenen Schwellwert beispielsweise einen effektiven Grenzfaktor $r\_eff$ sowie eine Anzahl an Schreibzugriffen $n\_akt$ aus dem Speicher 101. Bei der Anzahl an Schreibzugriffen $n\_akt$ handelt es sich um einen akkumulierten Wert, der die Anzahl der Schreibzugriffe seit, Herstellung des Steuergeräts darstellt.

Die Anzahl an Schreibzugriffen $n\_akt$ wird dazu bei jedem Schreibzugriff auf den Speicher 101 um 1 erhöht und zusammen mit Daten D von der Berechnungseinrichtung 108 in dem Speicher 101 abgespeichert.

Der erste vorgegebene Schwellwert $r\_eff$ wird abhängig von einer maximalen Speicherzyklenzahl $n\_max$ und beispielsweise für eine vom Fahrzeughersteller spezifizierte Fahrzeuglaufleistung $km\_max$ berechnet. Beispielsweise wird die spezifizierte Fahrzeuglaufleistung $km\_max = 300000$ km gewählt. Damit ergibt sich bei einer vom Hersteller des Speichers 101 spezifizierten maximalen Speicherzyklenzahl $n = 100000$ ein Grenzfaktor

$$r\_grenz = n\_max/km\_max = 1/3 \text{ Zyklen je Kilometer.}$$

Im Durchschnitt darf also höchstens alle 3 km ein Speichervorgang erfolgen, um eine zuverlässige Funktion des Steuergeräts während der gesamten spezifizierten Fahrzeuglaufleistung zu gewährleisten.

Aus dem Grenzfaktor $r\_grenz$ ergibt sich der erste vorgegebene Schwellwert $r\_eff$ entweder direkt als

$$r\_eff = r\_grenz,$$

oder unter Berücksichtigung eines Faktors F als

$$r\_eff = r\_grenz * F.$$

Der Faktor F stellt dabei einen Sicherheitsabschlag dar, der beispielsweise vor der ersten Inbetriebnahme des Steuergeräts 101 an die Bedürfnisse des Nutzers des Steuergeräts 101 angepasst wird. Der Faktor F wird deshalb beispielsweise zu 0,9 gewählt.

Der erste vorgegebene Schwellwert r_eff wird beispielsweise bei der Herstellung des Steuergeräts fest in dem Speicher 101 abgespeichert. In diesem Falle handelt es sich bei dem Speicher 101 um einen nichtflüchtigen Speicher. Alternativ kann der erste vorgegebene Schwellwert r_eff auch in einem anderen nichtflüchtigen Speicher oder auch nach der Herstellung des Steuergeräts 101 abgespeichert werden.

Die Ermittlungseinrichtung 107 ermittelt einen Sollwert, der im Folgenden auch als vorgegebene Zeitdauer tN bezeichnet wird. Die Erfindung beschränkt sich dabei nicht auf die Ermittlung des Sollwerts als vorgegebene Zeitdauer. Vielmehr kann der Sollwert auch eine beliebige andere Größe sein, die als Kriterium zur Bestimmung eines geeigneten Abspeicherzeitpunkts im Sinne dieser Erfindung dient. Beispielsweise kann der Sollwert auch eine Anzahl an aufeinander folgenden Betriebszyklen, wie zum Beispiel Zündungszyklen im Falle eines Kraftfahrzeugs sein.

Der Sollwert wird gemäß einer ersten Ausführungsform zuerst auf einen zweiten vorgegebenen Schwellwert N gesetzt, der beispielsweise aus dem Speicher 101 gelesen wird. Der zweite vorgegebene Schwellwert N wird beispielsweise abhängig davon bestimmt, wie lange die Abspeicherung der Daten D in dem Speicher 101 auf jeden Fall verzögert werden soll, um beispielsweise bei kurzfristigen Betriebsunterbrechungen keine Abspeicherung vorzunehmen. Der zweite vorgegebene Schwellwert N wird beispielsweise zu 2 Minuten um mindestens 2 Minuten zu warten, bevor eine Abspeicherung vorgenommen wird. Der zweite vorgegebene Schwellwert N wird beispielsweise zu Null gewählt um die Daten m immer sofort nach dem Abschaltewunsch abzuspeichern. Der zweite vorgegebene Schwellwert N wird bei der Herstellung des Steuergeräts 100 in dem Speicher 101 abgespeichert.

Die Ermittlungseinrichtung 107 ermittelt zudem eine Häufigkeit r_akt der Schreibvorgänge pro Betriebseinheit des Steuergeräts 100. Die Betriebseinheit des Steuergeräts 100 ist beispielsweise die aktuelle Laufleistung akt. Die Häufigkeit r_akt der Schreibvorgänge pro Betriebseinheit des Steuergeräts 100 wird beispielsweise abhängig von der aktuellen Laufleistung akt und der Anzahl an Schreibzugriffen n_akt beispielsweise wie folgt berechnet:

$$r\_akt = n\_akt/akt.$$

Die Ermittlungseinrichtung 107 vergleicht die Häufigkeit der Schreibvorgänge pro Betriebseinheit r_akt des Steuergeräts 100 mit dem ersten vorgegebenen Schwellwert r_eff und erhöht den Sollwert, beispielsweise die vorgegebene Zeitdauer tN um einen ersten vorgegebenen Wert $\Delta t1$, wenn die Häufigkeit r_akt der Schreibvorgänge pro Betriebseinheit des Steuergeräts 100 größer als der erste vorgegebene Schwellwert r_eff ist. Der erste vorgegebene Wert $\Delta t1$ wird beispielsweise aus dem Speicher 101 gelesen.

Der erste vorgegebene Wert $\Delta t1$ dient der sukzessiven Verlängerung der vorgegebenen Zeitdauer tN und wird beispielsweise zu 1 Minute gewählt und ebenfalls bei der Herstellung des Steuergeräts 100 im Speicher 101 abgespeichert.

Die Ermittlungseinrichtung 107 prüft außerdem, ob die vorgegebene Zeitdauer tN größer als der dritter vorgegebener Wert tNmax ist. Der dritte vorgegebene Wert tNmax entspricht einer maximalen Verlängerung der vorgegebenen Zeitdauer tN, beispielsweise 15 Minuten, die so bestimmt wird, dass beispielsweise eine zur Spannungsversorgung des Steuergeräts verwendete Batterie nicht übermäßig beansprucht wird, wenn das Steuergerät nicht betrieben wird. Der dritte vorgegebene Wert tNmax wird beispielsweise bei der Herstellung des Steuergeräts in dem Speicher 101 abgespeichert und aus dem Speicher 101 gelesen.

Zudem prüft die Ermittlungseinrichtung 107, ob die vorgegebene Zeitdauer tN größer als der zweite vorgegebene Schwellwert N ist. Der zweite vorgegebene Schwellwert N stellt dabei eine Wartezeit dar, die bei beliebiger Speicherhäufigkeit auf jeden Fall gewartet werden soll. Außerdem wird durch den zweiten vorgegebenen Schwellwert N verhindert, dass der Sollwert beliebig klein beispielsweise kleiner als Null wird. Die Ermittlungseinrichtung 107 verringert die vorgegebene Zeitdauer tN um einen zweiten vorgegebenen Wert $\Delta t2$, so lange die vorgegebene Zeitdauer tN größer als der zweite vorgegebene Schwellwert N ist. Der zweite vorgegebene Wert $\Delta t2$ wird beispielsweise ebenfalls zu 1 Minute gewählt und bei der Herstellung des Steuergeräts 100 im Speicher 101 abgespeichert. Die Ermittlungseinrichtung 107 liest dann den zweiten vorgegebenen Wert $\Delta t2$ aus dem Speicher 101.

Die Ermittlungseinrichtung 107 liest zudem im Falle, dass das Steuergerät in einem Kraftfahrzeug verbaut ist, einen Zündungszyklus CIGN, der beispielsweise in bekannter Weise von einer in dem Kraftfahrzeug vorgesehenen Motorsteuerung bestimmt und als ganzzahlige Größe in bekannter Weise beispielsweise über einen CAN Bus an das Steuergerät 100 übermittelt wird. Der Zündungszyklus gibt als ganzzahligen Wert größer Null an, wie oft die Zündung des Kraftfahrzeugs seit der Herstellung des Kraftfahrzeugs betätigt wurde.

Die Ermittlungseinheit 107 ermittelt aus dem Zündungszyklus CIGN eine dritte Schwelle SIGN, beispielsweise abhängig davon, wie viele Zündungszyklen vor einer erneuten Erhöhung der vorgegebenen Zeitdauer tN gewartet werden soll. Beispielsweise wird die dritte Schwelle wie folgt in Abhängigkeit von einem vierten vorgegebenen Wert Z ermittelt:

$$SIGN = CIGN + Z.$$

Der vierte vorgegebene Wert Z wird beispielsweise auf 10 gesetzt.

Die Ermittlungseinheit 107 prüft, ob der Zündungszyklus CIGN größer als die dritte Schwelle SIGN ist und erhöht die vorgegebene Zeitdauer tN nur dann um den ersten vorgegebenen Wert $\Delta t1$, wenn der Zündungszyklus CIGN größer als die dritte Schwelle SIGN ist.

Die Ermittlungseinheit 107 empfängt das Signal A und startet einen Zeitgeber der in der Ermittlungseinrichtung 107 vorgesehen ist, und eine Zeit t ausgibt. Dazu wird der Zeitgeber beispielsweise bei einer steigenden Flanke des Signals A, also sobald sich der Wert des Signals A von Null auf Eins ändert, gestartet.

Die Berechnungseinrichtung 108 empfängt die Zeit t und die vorgegebene Zeitdauer tN von der Ermittlungseinrichtung 107. Die Berechnungseinrichtung 108 prüft, ob die Zeit t, die seit der Erfassung des Ausschaltewunsches A verstrichen ist, die vorgegebene Zeitdauer tN überschreitet. Sobald die Zeit t die vorgegebene Zeitdauer tN überschreitet werden die Daten D von der Berechnungseinrichtung 108 in den Speicher 101 abgespeichert.

Gleichzeitig wird zusätzlich die Anzahl an Schreibzugriffen n_akt von der Berechnungseinrichtung 108 um Eins erhöht und ebenfalls im Speicher 101 abgespeichert. Die Berechnungseinrichtung 108 löst anschließend in bekannter Weise das Abschalten des Steuergeräts 100 aus.

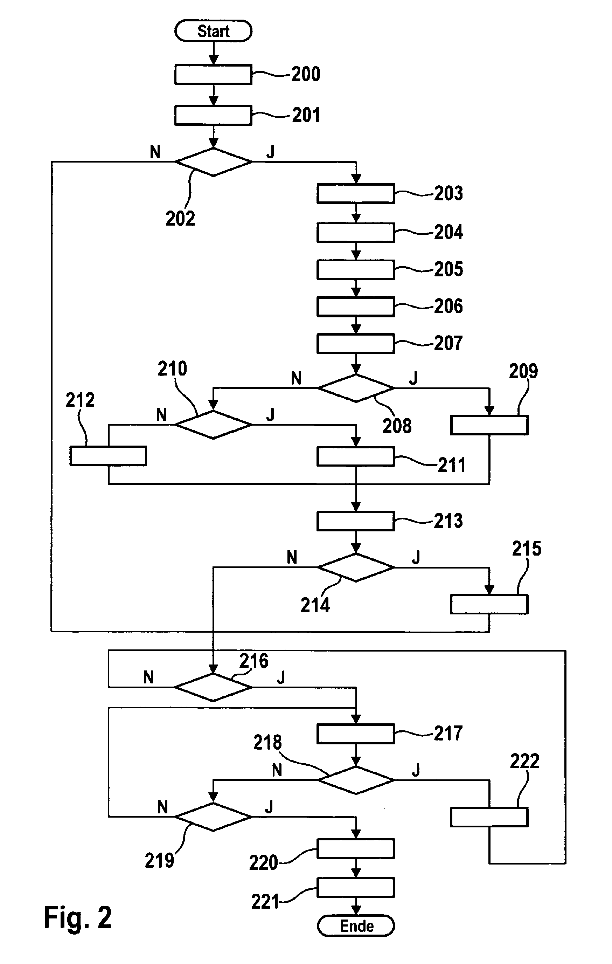

Eine erste Ausführungsform des erfindungsgemäße Verfahren wird im folgenden anhand des Ablaufplans aus Figur 2 erläutert. Vor dem Start des Verfahrens wird bei einer Initialisierung des Speichers 101 beispielsweise während der Herstellung des Steuergeräts 100 der Wert der Anzahl der Schreibzugriffe n_akt im Speicher 101 auf 0 gesetzt. Das Verfahren wird bei jedem Start des Steuergeräts 100 gestartet. Anschließend wird das Verfahren mit einem Schritt 200 fortgesetzt.

Beim Schritt 200 wird der zweite vorgegebene Schwellwert N aus dem Speicher 101 gelesen und die vorgegebene Zeitdauer tN gleich dem zweiten vorgegebenen Schwellwert N gesetzt. Zudem wird eine Änderung der vorgegebene Zeitdauer $\Delta tN$ auf Null gesetzt. Außerdem wird der dritte Schwellwert SIGN auf den vierten vorgegebenen Wert Z gesetzt. Der dritte Schwellwert SIGN, die vorgegebene Zeitdauer tN und die Änderung der vorgegebene Zeitdauer $\Delta tN$ sind beispielsweise als Variablen in einem RAM im Steuergerät 100 angelegt. Anschließend wird das Verfahren bei einem Schritt 201 fortgesetzt.

Beim Schritt 201 wird der Zündungszyklus CIGN als ganzzahlige Größe beispielsweise vom CAN Bus gelesen. Anschließend wird das Verfahren bei einem Schritt 202 fortgesetzt.

Beim Schritt 202 wird geprüft, ob der Zündungszyklus CIGN größer als der dritte Schwellwert SIGN ist. Falls der Zündungszyklus CIGN größer als der dritte Schwellwert SIGN ist, wird zu einem Schritt 203 verzweigt. Falls nicht, wird zu einem Schritt 216 verzweigt.

Beim Schritt 203 wird der dritte Schwellwert SIGN abhängig vom Zündungszyklus CIGN und dem vierten vorgegebenen Wert Z ermittelt. Beispielsweise wird der dritte Schwellwert wie folgt ermittelt:

$$SIGN = CIGN + Z.$$

Anschließend wird das Verfahren bei einem Schritt 204 fortgesetzt.

Beim Schritt 204 wird die Anzahl an bereits seit Herstellung des Steuergeräts erfolgten Schreibzugriffen n_akt beispielsweise aus dem Speicher 101 gelesen. Anschließend wird das Verfahren bei einem Schritt 205 fortgesetzt.

Beim Schritt 205 wird die aktuelle Fahrzeuglaufleistung akt beispielsweise vom CAN Bus gelesen. Anschließend wird das Verfahren bei einem Schritt 206 fortgesetzt.

Beim Schritt 206 wird die Häufigkeit r_akt der Schreibvorgänge pro Betriebseinheit des Steuergeräts 100 ermittelt. Die Häufigkeit r_akt wird beispielsweise abhängig von der Anzahl an Schreibzugriffen n_akt und der aktuellen Laufleistung akt beispielsweise wie folgt ermittelt:

$$r\_akt = n\_akt/akt.$$

Anschließend wird das Verfahren bei einem Schritt 207 fortgesetzt.

Beim Schritt 207 wird der erste vorgegebene Schwellwert r_eff als effektiver Grenzfaktor beispielsweise aus dem Speicher 101 gelesen. Anschließend wird das Verfahren bei einem Schritt 208 fortgesetzt.

Beim Schritt 208 wird geprüft, ob die Häufigkeit r_akt größer als der erste vorgegebene Schwellwert r_eff ist. Falls die Häufigkeit r_akt größer als der erste vorgegebene Schwellwert r_eff ist, wird zu einem Schritt 209 verzweigt. Falls nicht, wird zu einem Schritt 210 verzweigt.

Beim Schritt 209 wird der erste vorgegebene Wert $\Delta t1$ aus dem Speicher 101 gelesen und die Änderung der vorgegebene Zeitdauer $\Delta tN$ gleich dem ersten vorgegebenen Wert $\Delta t1$ beispielsweise gleich 1 Minute gesetzt. Anschließend wird das Verfahren beim Schritt 213 fortgesetzt.

Beim Schritt 210 wird geprüft, ob die vorgegebene Zeitdauer tN größer als der zweite vorgegebene Schwellwert N ist. Falls "Ja", wird zu einem Schritt 211 verzweigt. Falls "Nein", wird zu einem Schritt 212 verzweigt.

Beim Schritt 211 wird der zweite vorgegebene Wert $\Delta t2$ aus dem Speicher 201 gelesen und die Änderung der vorgegebene Zeitdauer $\Delta tN$ gleich dem zweiten vorgegebenen Wert $\Delta t2$, beispielsweise gleich -1 Minute gesetzt. Anschließend wird das Verfahren beim Schritt 213 fortgesetzt.

Beim Schritt 212 wird die Änderung der vorgegebene Zeitdauer $\Delta tN = 0$ gesetzt. Anschließend wird das Verfahren beim Schritt 213 fortgesetzt.

Beim Schritt 213 wird die vorgegebene Zeitdauer tN abhängig von der Änderung der Nachlaufzeit $\Delta tN$ ermittelt. Beispielsweise wird die vorgegebene Zeitdauer tN wie folgt berechnet:

$$tN = tN + \Delta tN.$$

Anschließend wird das Verfahren bei einem Schritt 214 fortgesetzt.

Beim Schritt 214 wird geprüft, ob die vorgegebene Zeitdauer tN größer als der dritter vorgegebener Wert tNmax, beispielsweise 15 Minuten ist. Falls "Ja", wird zu einem Schritt 215 verzweigt. Andernfalls wird zu einem Schritt 216 verzweigt.

Beim Schritt 215 wird die vorgegebene Zeitdauer tN gleich dem dritten vorgegebenen Wert tNmax gesetzt. Anschließend wird das Verfahren beim Schritt 216 fortgesetzt.

Beim Schritt 216 wird geprüft, ob das Signal A eine positive Flanke hat. Falls das Signal A einen positive Flanke hat wird zu einem Schritt 217 verzweigt. Falls nicht wird zum Schritt 216 verzeigt.

Beim Schritt 217 wird der Zeitgeber gestartet, oder im Falle dass der Zeitgeber bereits läuft weiter betrieben. Anschließend wird das Verfahren beim Schritt 218 fortgesetzt.

Beim Schritt 218 wird geprüft, ob das Signal A eine negative Flanke hat. Falls das Signal A eine negative Flanke hat wird zu einem Schritt 222 verzweigt. Falls nicht wird zum Schritt 219 verzweigt.

Beim Schritt 219 wird geprüft, ob die Zeit t größer als die vorgegebene Zeitdauer tN ist. Falls die Zeit t größer als die vorgegebene Zeitdauer tN ist, wird zu einem Schritt 220 verzweigt. Falls nicht, wird zum Schritt 217 verzweigt.

Beim Schritt 220 wird die Anzahl an Schreibzugriffen n_akt um Eins erhöht, der Zeitgeber gestoppt und die Zeit t auf den Wert Null gesetzt. Anschließend wird das Verfahren bei einem Schritt 221 fortgesetzt.

Beim Schritt 221 werden die Daten D und die Anzahl an Schreibzugriffen n_akt in dem Speicher 101 abgespeichert. Anschließend wird das Steuergerät abgeschaltet und das Verfahren beendet.

Beim Schritt 222 wird der Zeitgeber gestoppt und die Zeit t auf den Wert Null gesetzt. Anschließend wird das Verfahren beim Schritt 216 fortgesetzt.

In einer zweiten Ausführungsform wird zur Berechnung des Signals akt anstelle der Laufleistung des Kraftfahrzeugs eine aktuelle Anzahl der Betriebsstunden verwendet. Das bedeutet, dass die Betriebseinheit des Steuergeräts 100 in diesem Falle die Anzahl der Betriebsstunden ist. Alternativ kann auch die Anzahl der Ein- oder Ausschaltvorgänge beziehungsweise der Betriebszyklen des Steuergeräts 100 als Betriebseinheit des Steuergeräts 100 verwendet werden. Dadurch lässt sich das erfindungsgemäße Verfahren auch allgemein auf elektronische Geräte anwenden. Dazu wird der Ausschaltewunsch beispielsweise mittels eines Schaltsignals, das von einem Ein-/Ausschalter des elektronischen Geräts an das Steuergerät 100 gesendet wird, erfasst. Das Vergleichsergebnis wird entsprechend der ersten Ausführungsform berechnet, wobei anstelle des Zündungszyklusses CIGN nun ein interner Zähler, der die Betriebszyklen des elektrischen Geräts zählt, verwendet wird. Die Schritte des Verfahrens werden entsprechend der ersten Ausführungsform ausgeführt.

In einer Modifikation der ersten oder der zweiten Ausführungsform können zur Vereinfachung der Anordnung die Schritte 202, 203 und 204 zur Auswertung des Zündungszyklusses CIGN oder des Betriebszyklusses entfallen. In diesem Falle wird nach dem Schritt 201 anstelle des Schritts 202 direkt der Schritt 205 ausgeführt.

Das erfindungsgemäße Verfahren wird vorzugsweise als Computerprogramm auf dem Steuergerät 100 ausgeführt. Dazu ist das Computerprogramm beispielsweise auf einem Computerprogrammprodukt abgespeichert und bei der Herstellung des Steuergeräts 100 in den Speicher 101 übertragen.

**Patentansprüche**

1. Verfahren zum Betreiben eines Steuergeräts (100), bei dem nach Erfassung eines Ausschaltwunsches (IGN) Daten (D) in einem Speicher (101) abgespeichert werden sollen, **dadurch gekennzeichnet, dass** es folgende Schritte umfasst:

   - Vorgabe eines Sollwerts (tN) für eine Zeitdauer, um die das Steuergerät (100) verlängert eingeschaltet gelassen werden soll,
   - Ermittlung eines Ist-Werts (t), wobei der Ist-Wert (t) einer Zeit entspricht, die nach Erfassung des Ausschaltwunsches (IGN) verstrichen ist
   - Vergleich des Ist-Werts (t) mit dem Sollwert (tN),
   - Abspeichern der Daten (D), sobald der Ist-Wert (t) den Sollwert (tN) überschreitet, wobei der Sollwert (tN) abhängig von einer Häufigkeit (r_akt) der Schreibvorgänge pro Betriebseinheit des Steuergeräts (100) korrigiert wird.

2. Verfahren nach einem der vorhergehenden Ansprüche, **dadurch gekennzeichnet, dass**

   a. ein erster Schwellwert (r_eff) vorgegeben wird,
   b. die Häufigkeit (r_akt) ermittelt wird,
   c. die Häufigkeit (r_akt) mit dem ersten vorgegebenen Schwellwert (r_eff) verglichen wird,
   d. der Sollwert (tN) um einen ersten vorgegebenen Wert ( t1) erhöht wird, wenn die Häufigkeit (r_akt) größer als der erste vorgegebene Schwellwert (r_eff) ist.

3. Verfahren nach einem der vorhergehenden Ansprüche, **dadurch gekennzeichnet, dass**

   e. der erste Schwellwert (r_eff) vorgegeben wird,
   f. die Häufigkeit (r_akt) ermittelt wird,
   g. die Häufigkeit (r_akt) mit dem ersten vorgegebenen Schwellwert (r_eff) verglichen wird,
   h. der Sollwert (tN) um einen zweiten vorgegebenen Wert ( t2) verringert wird, wenn die Häufigkeit (r_akt) kleiner als der erste vorgegebene Schwellwert (r_eff) ist.

4. Verfahren nach Anspruch 3, **dadurch gekennzeichnet, dass**

   i. ein zweiter Schwellwert (N) vorgegeben wird,
   j. geprüft wird, ob der Sollwert (tN) größer als der zweite vorgegebene Schwellwert (N) ist,
   k. der Sollwert (tN) um den zweiten vorgegebenen Wert ( t2) verringert wird, solange der Sollwert (tN) größer als der zweite vorgegebene Schwellwert (N) ist.

5. Verfahren nach einem der vorhergehenden Ansprüche, **dadurch gekennzeichnet, dass** die Häufigkeit (r_akt) abhängig von einer aktuellen Laufleistung (km_akt) eines Kraftfahrzeugs oder einer aktuellen Anzahl an Betriebsstunden (tB_akt) des Steuergeräts (100) und einer Anzahl an Schreibzugriffen (n_akt) auf den Speicher (101) ermittelt wird.

6. Verfahren nach einem der vorhergehenden Ansprüche, **dadurch gekennzeichnet, dass** ein dritter vorgegebener Wert (tNmax) vorgegeben wird, und der Sollwert (tN) den dritten vorgegebenen Wert (tNmax) nicht überschreitet.

7. Verfahren nach einem der vorhergehenden Ansprüche, **dadurch gekennzeichnet, dass** das Steuergerät (100) abgeschaltet wird, sobald die Daten (D) abgespeichert wurden.

8. Steuergerät (100) mit einem Speicher (101), bei dem Daten (D) in dem Speicher (101) abgespeichert werden, **dadurch gekennzeichnet, dass**

   - eine Ermittlungseinrichtung (107) einen Sollwert (tN) vorgibt, für eine Zeitdauer, um die das Steuergerät (100) verlängert eingeschaltet gelassen werden soll,
   - die Ermittlungseinrichtung (107) einen Ist-Wert (t) ermittelt, wobei der Ist-Wert (t) einer Zeit entspricht, die nach Erfassung des Ausschaltwunsches (IGN) verstrichen ist - eine Berechnungseinrichtung (108) den Ist-Wert (t) mit dem Sollwert (tN) vergleicht, - die Berechnungseinrichtung (108) die Daten (D) abspeichert, sobald der Ist-Wert (t) den Sollwert (tN) überschreitet,
   wobei der Sollwert (tN) abhängig von einer Häufigkeit (r_akt) der Schreibvorgänge pro Betriebseinheit des Steuergeräts (100) korrigiert wird.

9. Computerprogramm, das alle Schritte eines Verfahrens nach einem der Ansprüche 1 bis 7 ausführt, wenn es auf einem Rechengerät abläuft.

10. Computerprogrammprodukt mit Programmcode, der auf einem maschinenlesbaren Träger gespeichert ist, zur Durchführung des Verfahrens nach einem der Ansprüche 1 bis 7, wenn das Programm auf einem Computer oder Steuergerät ausgeführt wird.

**Claims**

1. Method for operating a controller (100) in which data (D) is to be stored in a memory (101) after a switch-off request (IGN) has been registered, **characterized in that** said method comprises the following steps:

   - predefining a setpoint value (tN) for a time period by which the time for which the controller (100) is to be left switched on is to be extended,
   - determination of an actual value (t), wherein the actual value (t) corresponds to a time which has passed after registration of the switch-off request (IGN),
   - comparing the actual value (t) with the setpoint value (tN),
   - storing the data (D) as soon as the actual value (t) exceeds the setpoint value (tN), wherein the setpoint value (tN) is corrected as a function of the frequency (r_ akt) of the writing processes for each operating unit of the controller (100).

2. Method according to one of the preceding claims, **characterized in that**

   a. a first threshold value (r_ eff) is predefined,
   b. the frequency (r_ akt) is determined,
   c. the frequency (r_ akt) is compared with the first predefined threshold value (r_ eff),
   d. the setpoint value (tN) is increased by a first predefined value (t1) if the frequency (r_ akt) is higher than the first predefined threshold value (r_ eff).

3. Method according to one of the preceding claims, **characterized in that**

   e. the first threshold value (r_ eff) is predefined,
   f. the frequency (r_ akt) is determined,
   g. the frequency (r_ akt) is compared with the first predefined threshold value (r_ eff),
   h. the setpoint value (tN) is reduced by a second predefined value (t2) if the frequency (r_ akt) is lower than the first predefined threshold value (r_ eff).

4. Method according to Claim 3, **characterized in that**

   i. a second threshold value (N) is predefined,
   j. it is checked whether the setpoint value (tN) is higher than the second predefined threshold value (N),
   k. the setpoint value (tN) is reduced by the second predefined value (t2) as long as the setpoint value (tN) is higher than the second predefined threshold value (N).

5. Method according to one of the preceding claims, **characterized in that** the frequency (r_ akt) is determined as a function of a current kilometre reading (km_ akt) of a motor vehicle or of a current number of operating hours (tB_ akt) of the controller (100) and a number of writing access operations (n_ akt) to the memory (101).

6. Method according to one of the preceding claims, **characterized in that** a third predefined value (tNmax) is predefined and the setpoint value (tN) does not exceed the third predefined value (tNmax).

7. Method according to one of the preceding claims, **characterized in that** the controller (100) is switched off as soon as the data (D) has been stored.

8. Controller (100) having a memory (101) in which data (D) is stored in the memory (101), **characterized in that**

- a determining device (107) predefines a setpoint value (tN) for a time period by which the time for which the controller (100) is to be left switched on is to be extended,
- the determining device (107) determines an actual value (t), wherein the actual value (t) corresponds to a time which has passed after registration of the switch-off request (IGN) - a calculation device (108) compares the actual value (t) with the setpoint value (tN) - the calculation device (108) stores the data (D) as soon as the actual value (t) exceeds the setpoint value (tN),
wherein the setpoint value (tN) is corrected as a function of a frequency (r_ akt) of the writing processes for each operating unit of the controller (100).

9. Computer program which carries out all the steps of a method according to one of Claims 1 to 7 when it runs on a computing device.

10. Computer program product with program code which is stored on a machine-readable carrier, for carrying out the method according to one of Claims 1 to 7 when the program is carried out on a computer or controller.

**Revendications**

1. Procédé de conduite d'un appareil de commande (100) dans lequel des données (D) doivent être conservées dans une mémoire (101) après saisie d'un souhait de débranchement (IGN), **caractérisé en ce qu'**il comporte les étapes suivantes :

imposition d'une valeur de consigne (tN) de la durée pendant laquelle le branchement de l'appareil de commande (100) doit être prolongé,
détermination d'une valeur effective (t), la valeur effective (t) correspondant à la durée qui s'est écoulée depuis la saisie du souhait de débranchement (IGN),
comparaison de la valeur effective (t) à la valeur de consigne (tN) et
mise en mémoire des données (D) dès que la valeur effective (t) dépasse la valeur de consigne (tN), la valeur de consigne (tN) étant corrigée en fonction de la fréquence (r_akt) des opérations d'écriture par unité de fonctionnement de l'appareil de commande (100).

2. Procédé selon la revendication précédente, **caractérisé en ce que**

a. une première valeur de seuil (r_eff) est prédéterminée,
b. la fréquence (r_akt) est déterminée,
c. la fréquence (r_akt) est comparée à la première valeur de seuil (r_eff) prédéterminée,
d. la valeur de consigne (tN) est augmentée d'une première valeur prédéterminée (t1) si la fréquence (r_akt) est supérieure à la première valeur de seuil (r_eff) prédéterminée.

3. Procédé selon l'une des revendications précédentes, **caractérisé en ce que**

e. la première valeur de seuil (r_eff) est prédéterminée,
f. la fréquence (r_akt) est déterminée,
g. la fréquence (r_akt) est comparée à la première valeur de seuil (r_eff) prédéterminée,
h. la valeur de seuil (tN) est diminuée d'une deuxième valeur prédéterminée (t2) si la fréquence (r_akt) est inférieure à la première valeur de seuil (r_eff) prédéterminée.

**4.** Procédé selon la revendication 3, **caractérisé en ce que**

    i. une deuxième valeur de seuil (N) est prédéterminée,

    j. il est vérifié si la valeur de consigne (tN) est supérieure à la deuxième valeur de seuil (N) prédéterminée et

    k. la valeur de consigne (tN) est diminuée de la deuxième valeur prédéterminée (t2) tant que la valeur de consigne (tN) est supérieure à la deuxième valeur de seuil (N) prédéterminée.

**5.** Procédé selon l'une des revendications précédentes, **caractérisé en ce que** la fréquence (r_akt) est déterminée en fonction de la distance effectivement parcourue (km_akt) par un véhicule automobile ou un nombre effectif d'heures de fonctionnement (tB_akt) de l'appareil de commande (100) et du nombre d'accès d'écriture (n_akt) dans la mémoire (101).

**6.** Procédé selon l'une des revendications précédentes, **caractérisé en ce qu'**une troisième valeur de seuil (tNmax) prédéterminée est prédéterminée et **en ce que** la valeur de consigne (tN) ne dépasse pas la troisième valeur de seuil (tNmax) prédéterminée.

**7.** Procédé selon l'une des revendications précédentes, **caractérisé en ce que** l'appareil de commande (100) est débranché dès que les données (D) ont été conservées en mémoire.

**8.** Appareil de commande (100) doté d'une mémoire (101), et dans lequel des données (D) sont conservées dans la mémoire (101), **caractérisé en ce que**
un dispositif de détermination (107) définit une valeur de consigne (tN) de la durée pendant laquelle le branchement de l'appareil de commande (100) doit être prolongé,
le dispositif de détermination (107) détermine une première valeur effective (t), la valeur effective (t) correspondant à la durée qui s'est écoulée depuis la saisie du souhait de débranchement (IGN),
un dispositif de calcul (108) qui compare la valeur effective (t) à la valeur de consigne (tN),
le dispositif de calcul (108) conservant en mémoire les données (D) dès que la valeur effective (t) dépasse la valeur de consigne (tN) et
la valeur de consigne (tN) étant corrigée en fonction de la fréquence (r_akt) des opérations d'écriture par unité de fonctionnement de l'appareil de commande (100).

**9.** Programme informatique qui exécute toutes les étapes d'un procédé selon l'une des revendications 1 à 7 lorsqu'il se déroule sur un appareil de calcul.

**10.** Produit de programme informatique doté d'un code de programme conservé en mémoire sur un support lisible par machine, en vue de la mise en oeuvre du procédé selon l'une des revendications 1 à 7 lorsque le programme est exécuté sur un ordinateur ou un appareil de commande.

# Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1089148 A2